Europäisches Patentamt

(19) European Patent Office

Office européen des brevets

(11) Numéro de publication: **0 084 983**

**B1**

(12) # FASCICULE DE BREVET EUROPÉEN

(45) Date de publication du fascicule du brevet:
**23.07.86**

(21) Numéro de dépôt: **83400005.1**

(22) Date de dépôt: **04.01.83**

(51) Int. Cl.⁴: **G 01 N 21/07**

(54) Dispositif de conditionnement pour analyses multiples.

(30) Priorité: **14.01.82 FR 8200529**

(43) Date de publication de la demande:
**03.08.83 Bulletin 83/31**

(45) Mention de la délivrance du brevet:
**23.07.86 Bulletin 86/30**

(84) Etats contractants désignés:
**AT BE CH DE FR GB IT LI LU NL SE**

(56) Documents cité:
**FR-A-2 238 929**
**US-A-3 799 742**
**US-A-3 895 661**

(73) Titulaire: **Guigan, Jean, 9, rue Jean Mermoz,**
**F-75008 Paris (FR)**

(72) Inventeur: **Guigan, Jean, 9, rue Jean Mermoz,**
**F-75008 Paris (FR)**

(74) Mandataire: **Weinmiller, Jürgen, Zeppelinstrasse**
**63, D-8000 München 80 (DE)**

## Description

L'invention a pour objet un dispositif de conditionnement pour analyses multiples à partir d'un échantillon liquide, comportant un réceptacle en liaison avec n cellules d'analyse calibrées dans lesquelles sont introduits des réactifs d'analyse, le liquide à analyser étant acheminé du réceptacle vers lesdites cellules d'analyse par centrifugation, chacune des cellules étant munie d'un orifice capillaire d'introduction de liquide et d'un conduit capillaire d'échappement de l'air.

Les dispositif connus actuellement se présentent sous forme de disques dans lesquels le réceptacle est situé au centre et les n cellules d'analyse à la périphérie (voir p. ex. FR—A—2 238 929).

On ne peut donc, avec de tels dispositifs, traiter simultanément avec un même rotor que n analyses.

US—A—3 895 661 décrit un dispositif de conditionnement pour analyses multiples se présentant sous la forme d'une barrette comportant des cellules d'analyse sensiblement alignées le long de la barrette. Toutefois ici le liquide à analyser n'est pas acheminé vers les cellules d'analyse par centrifugation.

La présente invention a pour but de remédier à cet inconvénient et de présenter un dispositif de conditionnement pour analyses multiples à partir d'un échantillon liquide, de structure simple tel qu'une pluralité de tels dispositifs soient susceptibles d'être traités simultanément avec un même rotor, d'où, en particulier, un gain important de place et de temps.

L'invention a pour objet un dispositif de conditionnement pour analyses multiples à partir d'un échantillon liquide à analyser, comportant un réceptacle en liaison avec n cellules d'analyse calibrées dans lesquelles sont introduits des réactifs d'analyse, le liquide à analyser étant acheminé du réceptacle vers lesdites cellules d'analyse par centrifugation, chacune des cellules étant munie d'un orifice capillaire d'introduction de liquide et d'un conduit capillaire d'échappement de l'air, ledit dispositif étant caractérisé par le fait qu'il se présente sous la forme d'une barrette dont une première extrémité comporte ledit réceptacle, ce dernier débouchant dans une première cuve, ou précuve, communiquant d'une part avec la première cellule d'analyse par l'orifice capillaire correspondant d'introduction du liquide et d'autre part par des moyens de communication correspondants avec une seconde précuve, laquelle communique d'une part avec la deuxième cellule d'analyse par l'orifice capillaire correspondant d'introduction du liquide et d'autre part, par des moyens de communication correspondants avec une troisième précuve, et ainsi de suite, la n ème précuve, qui est en communication avec la (n-1)ème précuve, communiquant avec la n ème cellule d'analyse par l'orifice capillaire correspondant d'introduction du liquide et une chambre de trop-plein située à proximité de la deuxième extrémité de la barre, les volumes des précuves étant légèrement supérieurs aux volumes des cellules d'analyse auxquelles elles sont respectivement associées, les cellules d'analyse, ainsi que les précuves, étant respectivement sensiblement alignées le long de la barrette, les moyens de communication entre les précuves étant agencés de manière à permettre un remplissage successif de celles ci et non simultané, ledit dispositif de conditionnement étant apte à être fixé sur un plateau circulaire tournant formant rotor, selon un rayon dudit plateau, l'extrémité de la barrette comportant le réceptacle étant située vers le centre du plateau, l'extrémité comportant la chambre de trop plein étant située vers la périphérie du plateau.

D'autres caractéristiques de l'invention ressortiront de la description qui va suivre et du dessin annexé dans lequel:

La figure 1 représente très schématiquement une vue en perspective d'un mode de réalisation d'un dispositif de conditionnement conforme à l'invention, la partie supérieure du dispositif ayant été dégagée de manière à mettre en évidence l'agencement interne.

La figure 2 est une coupe transversale du dispositif de la figure 1.

La figure 3 est une coupe selon la ligne III—III de la figure 2.

La figure 4 est une coupe selon la ligne IV—IV de la figure 2 .

La figure 5 est une coupe selon la ligne V—V de la figure 2.

La figure 6 est une vue en coupe d'un plateau circulaire tournant formant rotor supportant des dispositifs de conditionnement conformes à l'invention.

La figure 7 est une vue de dessus du plateau de la figure 6.

Sur ces figures, la référence 1 désigne le dispositif de conditionnement conforme à l'invention. Il se présente sensiblement sous la forme d'une barrette, qui peut, à titre illustratif et nullement limitatif, avoir une longueur d'environ 5 à 6 cm, une largeur de l'ordre du centimètre et une épaisseur voisine de 5 mm.

Dans le mode de réalisation représenté le dispositif de conditionnement 1 est réalisé par assemblage d'une partie 2 formant boîtier et d'une partie 3 formant couvercle.

La partie 2 formant boîtier comporte au voisinage d'une première extrémité 4 un réceptacle 5 dans lequel est introduit l'échantillon liquide à analyser. A cet effet la partie 3 formant couvercle présente un orifice approprié 6.

Le dispositif de conditionnement comporte "n" cellules d'analyse. Sur l'exemple représenté, ce nombre "n" est de 10 et les cellules d'analyse ont été référencées de 10 à 19.

Chacune des cellules d'analyse est précédée d'une précuve, pésantant un volume légèrement supérieur. Les précuves ont été référencées de 20 à 29. Pour la clarté du dessin, seules les références 20, 21, 25, 26 et 29 figurent.

La communication entre les cellules d'analyse et les précuves se fait au travers d'un orifice capillaire d'introduction de liquide. Ces orifices capillaires ont été référencés de 30 à 39. Pour la clarté du dessin, seules les références 30, 31, 36 et 39 figurent.

Par ailleurs, chacune des cellules d'analyse est reliée à un conduit capillaire d'échappement de l'air, référencé de 40 à 49 et débouchant sur la partie 3 formant couvercle par une ouverture référencée de 70 à 79. Pour la clarté du dessin, seules les référence de 40, 41, 45, 49, 70, 75 et 79 figurent.

La n$^e$ précuve, à savoir la précuve 29 débouche également dans une chambre de trop-plein 7 située à proximité de la deuxième extrémité 8 du dispositif de conditionnement.

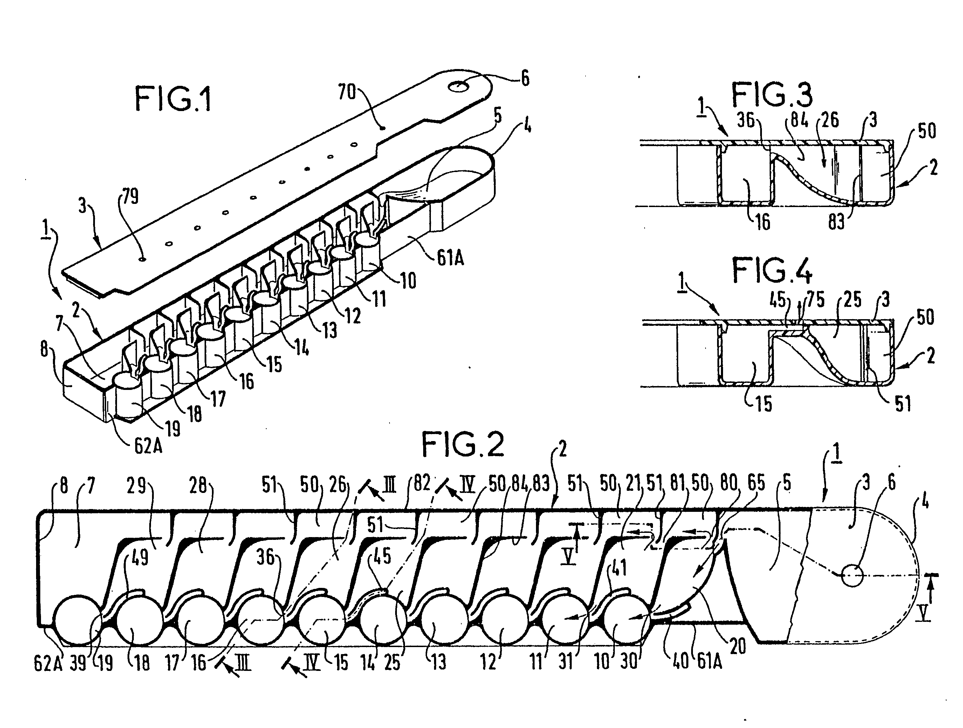

On peut constater, en se reportant aux figures 1 et 2, que dans le dispositif de conditionnement conforme à l'invention le réceptacle 5 débouche par le conduit ou orifice 65 dans la première précuve 20, qui communique d'une part avec la première cellule d'analyse 10 par l'orifice capillaire d'introduction de liquide 30 et d'autre par avec la seconde précuve 21 par l'orifice 80. Cette précuve 21 communique d'une part avec la deuxième cellule d'analyse 11 par l'orifice capillaire d'introduction de liquide 31 et d'autre part avec une troisième précuve 22 par l'orifice 81, et ainsi de suite.

La dernière précuve 29, qui est alimentée par la précuve 28 communique avec la dernière cellule d'analyse 19 par l'orifice capillaire d'introduction de liquide 39 et d'autre part avec la cellule de trop plein 7.

Les cellules d'analyse sont sensiblement adjacentes et alignées le long de la barrette; le précuves sont également alignées et adjacentes. Dans l'exemple représenté, toutes les précuves débouchent dans un canal 50 délimité par une paroi 82 du boîtier 2 et des parois 83 des précuves sensiblement parallèles à la paroi 82. Ce canal est muni de chicanes appropriées, telles que 51, assurant un remplissage successif, et non simultané des précuves lors du fonctionnement qui sera décrit par la suite. Les orifices de communication, tels que 80, 81 entre ce canal 50 et les différentes précuves ne sont pas capillaires. Les précuves sont délimitées par les parois 83 précitées et des parois telles que 84, sensiblement parallèles entre elles.

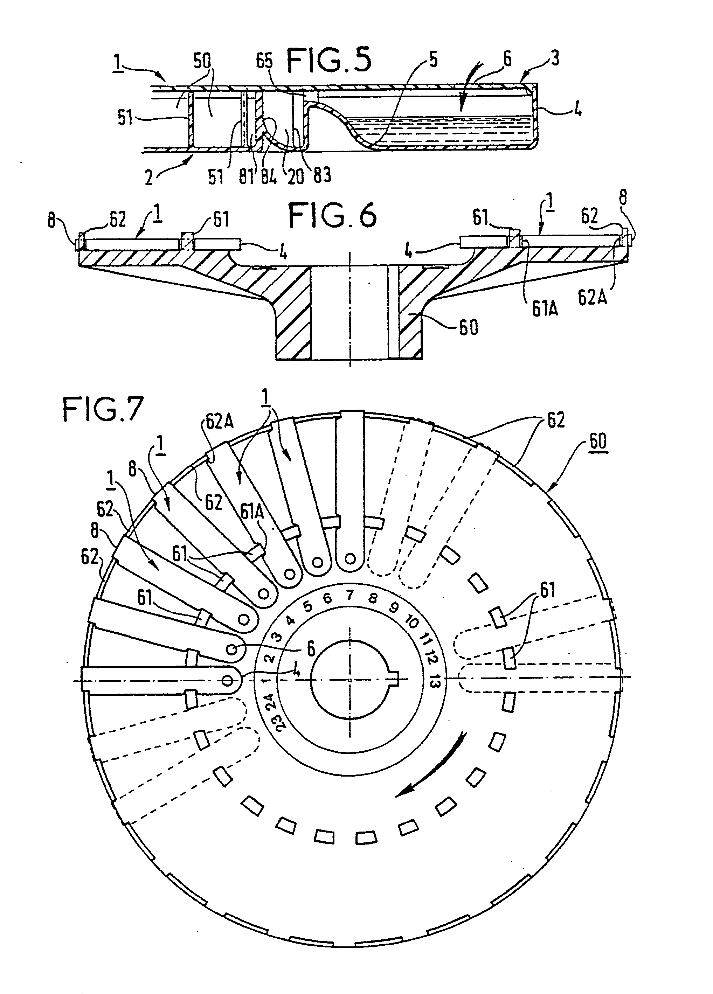

Sur la figure 5, qui est une coupe selon la ligne V—V de la figure 2, on peut constater que le réceptacle 5 de l'échantillon liquide à analyser présente un profil incurvé, dont la partie supérieure et située au voisinage de sa communication avec la précuve 20, le conduit ou orifice de communication 65 prévu à ce niveau n'étant pas capillaire.

Sur la figure 3 qui est une coupe selon la ligne III—III de la figure 2, on peut constater que les précuves, en l'occurence la précuve 26, présentent un profil incurvé dont la partie supérieure est située au voisinage de l'orifice capillaire d'introduction de liquide 36 dans la cellule d'analyse 16.

La figure 4, qui est une coupe selon la ligne IV—IV de la figure 2, met en évidence l'emplacement du conduit capillaire d'échappement d'air, en l'occurence le conduit 45 pour la cellule d'analyse 15, qui débouche sur le couvercle 3 par l'ouverture 75.

Comme cela apparait clairement sur la figure 1, les cellules d'analyse, dans l'exemple représenté, sont cylindriques. Elles peuvent présenter un diamètre d'environ 3 mm et une hauteur également voisine de 3 mm.

Dans chacune des cellules d'analyse sont introduits des réactifs appropriés, qui peuvent être séchés ou lyophilisés.

Au moins les parois délimitant le fond et le dessus des cellules d'analyse sont transparentes de manière à permettre une analyse colorimétrique.

Le dispositif de conditionnement en forme de barrette conforme à l'invention est apte à être fixé sur un plateau circulaire tournant formant rotor.

Sur les figures 6 et 7, la référence 60 désigne un tel plateau, entraîné en rotation par des moyens non représentés.

Les dispositifs de conditionnement 1 sont disposés selon des rayons dudit plateau 60, les extrémités 4 comportant les réceptacles étant situées vers le centre du plateau 60 alors que les extrémités 8 comportant les chambres de trop plein 7 étant situées vers la périphérie du plateau 60.

La fixation des dispositifs 1 sur le plateau 60 est réalisée par tout moyen convenable, à titre illustratif, et nullement limitatif, sur le mode d'exécution représenté le plateau 60 est muni de cales telles que 61 et 62 venant se mettre en place dans des logements appropriés 61A et 62A prévus sur le dispositif 1.

On peut de cette manière fixer sur le plateau tournant 60 un grand nombre de dispositifs de conditionnement 1, conformes à l'invention, dont les emplacements peuvent être repérés sur le plateau 60 par des chiffres par exemple, ainsi que représenté.

La mise en oeuvre de l'appareillage d'analyse est réalisée de la manière suivante:

Après fixation des dispositifs 1 sur le plateau tournant 60, on introduit dans les réceptacles 5, par les orifices 6, différents échantillons liquides à analyser.

Cette introduction est réalisée par tout moyen approprié, par exemple par des pipettes .

On met ensuite le rotor en marche.

Dans chacun des dispositifs 1, le liquide présent dans le réceptacle 5 est expulsé vers la première précuve qui est remplie rapidement, puis le liquide passe dans la deuxième précuve alors que le liquide présent dans la première précuve est introduit plus lentement, dans la première cellule d'analyse, du fait de la capillarité de l'orifice de communication entre la première précuve et la première cellule d'analyse.

Ce processus se reproduit en chaîne pour les autres précuves et cellules d'analyse.

Ainsi la deuxième précuve étant rapidement remplie, le liquide passe dans la troisième précuve alors que la deuxième cellule d'analyse se remplit lentement.

La dernière précuve étant remplie, l'excédent de liquide passe dans la chambre de trop plein alors que la dernièr cellule d'analyse se remplit lentement.

Pour des cellules présentant les dimensions indiquées précédemment, c'est-à-dire un volume d'environ 21 mm$^3$, on introduit dans le réceptacle pour un dispositif comportant 10 cellules d'analyse, environ 0,3 cm$^3$ d'échantillon liquide.

Pour une vitesse de rotation du plateau tournant d'environ 200 t/mn, on a constaté que l'ensemble des précuves d'un dispositif conforme à l'invention était rempli en moins de 1 seconde alors qu'il fallait environ 2 à 3 secondes pour remplir les cellules d'analyse.

A mesure du remplissage de ces dernières par le liquide à analyser, l'air s'échappe par les conduits capillaires.

A l'arrêt du rotor, toutes les cellules d'analyse sont complètement remplies et il subsiste un léger excédent de liquide dans les précuves ainsi que dans la chambre de trop plein. On peut alors precéder à des mesures colorimétriques.

## Revendications

1. Dispositif de conditionnement pour analyses multiples à partir d'un échantillon liquide à analyser, comportant un réceptacle (5) en liaison avec n cellules (10 à 19) d'analyse calibrées dans lesquelles sont introduits des réactifs d'analyse, le liquide à analyser étant acheminé du réceptacle vers lesdites cellules d'analyse par centrifugation, chacune des cellules étant munie d'un orifice (30 à 39) capillaire d'introduction du liquide et d'un conduit (40 à 49) capillaire d'échappement de l'air, ledit dispositif étant caractérisé par le fait qu'il se présente sous la forme d'une barrette (1) dont une première extrémité (4) comporte ledit réceptacle (5), ce dernier débouchant dans une première cuve, ou précuve (20), communiquant d'une part avec la première cellule (10) d'analyse par l'orifice (30) capillaire correspondant d'introduction du liquide et d'autre part, par des moyens de communication correspondants avec une seconde précuve (21), laquelle communique d'une part avec la deuxième (11) cellule d'analyse par l'orifice (31) capillaire correspondant d'introduction du liquide et d'autre part, par des moyens de communication correspondants avec une troisième précuve, et ainsi de suite, la n$^e$ précuve (29), qui est en communication avec la (n-1)$^e$ précuve (28), communiquant avec la n$^e$ cellule (19) d'analyse par l'orifice (39) capillaire correspondant d'introduction du liquide et une chambre (7) de trop plein située à proximité de la deuxième extrémité (8) de la barrette (1), les volumes des précuves (20 à 29) étant légèrement supérieurs aux volumes des cellules (10 à 19) d'analyse auxquelles elles sont respectivement associées, les cellules d'analyse, ainsi que les précuves étant respectivement sensiblement alignées le long de la barrette (1), les moyens de communication entre les précuves (20 à 29) étant agencés de manière à permettre un remplissage successif de celles ci et non simultané, ledit dispositif de conditionnement étant apte à être fixé sur un plateau (60) circulaire tournant formant rotor, selon un rayon dudit plateau, l'extrémité (4) de la barrette (1) comportant le réceptacle (5) étant située vers le centre du plateau (60), l'extrémité (8) comportant la chambre (7) de trop-plein étant située vers la périphérie du plateau (60).

2. Dispositif selon la revendication 1, caractérisé par le fait que le réceptacle (5) présente un profil incurvé dont la partie supérieure est située au voisinage de sa communication avec la première précuve (20).

3. Dispositif selon l'une des revendications précédentes, caractérisé par le fait que les précuves (20 à 29) présentent un profil incurvé dont la partie supérieure est située au voisinage de l'orifice (30 à 39) capillaire d'introduction dans la cellule (10 à 19) d'analyse correspondante.

4. Dispositif selon l'une des revendications 1 à 3, caractérisé par le fait que les moyens de communication entre les précuves comportent un canal (50) muni de chicanes (51) transversales par rapport à l'axe longitudinal du dispositif.

5. Dispositif selon l'une des revendications 1 à 4, caractérisé par le fait que les cellules (10 à 19) d'analyse sont sensiblement adjacentes.

6. Dispositif selon l'une des revendications 1 à 5, caractérisé par le fait que les précuves (20 à 29) sont adjacentes.

7. Dispositif selon l'une des revendications 1 à 6, caractérisé par le fait que les cellules (10 à 19) d'analyse sont sensiblement cylindriques.

8. Dispositif selon l'une des revendications 1 à 7, caractérisé par le fait que les parois délimitant le fond et le dessus des cellules (10 à 19) d'analyse sont transparentes de manière à permettre une analyse colorimétrique.

9. Dispositif selon l'une des revendications 1 à 8, caractérisé par le fait qu'il comporte des moyens (61A, 62A) permettant sa fixation sur le plateau (60) circulaire tournant.

## Patentansprüche

1. Konditionierungsvorrichtung für Mehrfachanalysen ausgehend von einer zu analysierenden flüssigen Probe, mit einem Behälter (5) in Verbindung mit n kalibrierten Analysezellen (10 bis 19), in die Analysereagentien eingeführt werden, wobei die zu analysierende Flüssigkeit durch Zentrifugieren vom Behälter zu den Analysezellen gebracht wird und jede der Zellen mit einer Kapillaröffnung (30 bis 39) zur Einführung der Flüssigkeit und mit einer Kapillarleitung (40 bis 49) für den Luftauslaß versehen ist, dadurch gekennzeichnet, daß sie die Form eines Stabes (1) aufweist, von dem ein erstes Ende (4) den Behälter (5) aufweist, wobei dieser letztere in eine erste Schale, oder Vor-Schale (20) mündet, die einerseits mit der ersten Analysezelle (10) über die entsprechende Kapillaröffnung (30) zur Einführung der Flüssigkeit und andererseits über entsprechende Verbindungsmittel mit einer zweiten Vor-Schale (21) verbunden ist, die einerseits mit der zweiten Analysezelle (11) über die entsprechende Kapillaröffnung (31) zur Einführung der Flüssigkeit und andererseits über entsprechende Verbindungsmittel mit einer dritten Vor-Schale verbunden ist, und so weiter, wobei die n-te Vor-Schale (29), die mit der (n-1)sten Vor-Schale in Verbindung steht, mit der n-ten Analysezelle (19) über die entsprechende Kapillaröffnung (39) zur Einführung der Flüssigkeit verbunden ist, und mit einer Überlaufkammer (7), die in der Nähe des zweiten Endes (8) des Stabes (1) angeordnet ist, wobei die Volumen der Vor-Schalen (20 bis 29) etwas größer sind als die Volumen der Analysezellen (10 bis 19), denen sie jeweils zugeordnet sind, wobei die Analysezellen sowie die Vor-Schalen jeweils im wesentlichen fluchtend entlang des Stabes (1) angeordnet sind, wobei die Verbindungsmittel zwischen den Vor-Schalen (20 bis 29) so ausgebildet sind, daß sie ein aufeinanderfolgendes und nicht ein gleichzeitiges Füllen der letzteren ermöglichen, wobei die Konditioniervorrichtung auf einer kreisförmigen drehenden, einen Rotor bildenden Platte (60) befestigt werden kann, gemäß einem Radius der Platte, wobei das Ende (4) des Stabes (1) mit dem Behälter (5) zur Mitte der Platte (60) hin angeordnet ist, während das Ende (9) mit der Überlaufkammer (7) in Richtung auf den Umfang der Platte (60) hin angeordnet ist.

2. Vorrichtung nach Anspruch 1, dadurch gekennzeichnet, daß der Behälter (5) ein gekrümmtes Profil aufweist, dessen oberer Teil sich in der Nähe seiner Verbindung mit der ersten Vor-Schale (20) befindet.

3. Vorrichtung nach einem der vorhergehenden Ansprüche, dadurch gekennzeichnet, daß die Vor-Schalen (20 bis 29) ein gekrümmtes Profil aufweisen, dessen oberer Teil sich in der Nähe der Kapillar-Einführungöffnung (30 bis 39) in die entsprechende Analysezelle (10 bis 19) befindet.

4. Vorrichtung nach einem der Ansprüche 1 bis 3, dadurch gekennzeichnet, daß die Verbindungsmittel zwischen den Vor-Schalen einen mit Schikanen (51), die transversal in bezug auf die Längsachse der Vorrichtung liegen, versehenen Kanal aufweisen.

5. Vorrichtung nach einem der Ansprüche 1 bis 4, dadurch gekennzeichnet, daß die Analysezellen (10 bis 19) im wesentlichen nebeneinander liegen.

6. Vorrichtung nach einem der Ansprüche 1 bis 5, dadurch gekennzeichnet, daß die Vor-Schalen (20 bis 29) nebeneinander liegen.

7. Vorrichtung nach einem der Ansprüche 1 bis 6, dadurch gekennzeichnet, daß die Analysezellen (10 bis 19) im wesentlichen zylindrisch sind.

8. Vorrichtung nach einem der Ansprüche 1 bis 7, dadurch gekennzeichnet, daß die den Boden und die Decke der Analysezellen (10 bis 19) begrenzenden Wände transparent sind, um eine colorimetrische Analyse zu ermöglichen.

9. Vorrichtung nach einem der Ansprüche 1 bis 8, dadurch gekennzeichnet, daß sie Mittel (61A, 62A) aufweist, die ihre Befestigung auf der drehenden kreisförmigen Platte (60) ermöglichen.

## Claims

1. A device for conditioning liquid samples for multiple analyses comprising a receptacle (5) which communicates with n calibrated analysis cells (10 to 19) in which analysis reagents are introduced, the liquid to be analysed being conveyed from the receptacle to said analysis cells by centrifuging, each of the cells being provided with a capillary liquid-insertion orifice (30 to 39) and an air exhaust capillary pipe (40 to 49), characterized in that the device is in the form of a strip (1), a first end (4) of which carries said receptacle (5), the latter communicating with a first tank, or pre-tank (20), which communicates on the one hand with the first analysis cell (10) via the capillary liquid-insertion orifice (30), and on the other hand via corresponding communication means with a second pre-tank (21), which communicates on the one hand with the second analysis cell (11) via the corresponding capillary liquid-insertion orifice (31) and on the other hand via corresponding communications means with a third pre-tank, and so on, the $n^{th}$ tank (29) which is in communication with the $(n-1)^{th}$ tank (28) communicating with the $n^{th}$ analysis cell (19) via the corresponding capillary liquid-insertion orifice (39) and with an overflow chamber (7) located near the second end (8) of the strip (1), the volumes of the pre-tanks (20 to 29) being slightly greater than the volumes of the analysis cells (10 to 19) to which they are respectively associated, the analysis cells as well as the pre-tanks being respectively substantially aligned along the strip (1), the communication means between the pre-tanks (20 to 29) being arranged so as to allow successive and not simultaneous filling thereof, said conditioning device being suitable for being fixed to a rotary circular plate (60) which forms a rotor, and being placed along a radius of said plate, the strip (1) end (4) which comprises the receptacle (5) being located near the centre of the plate (60), whereas the end (8) which comprises the overflow chamber (7) is situated near the periphery of the plate (60).

2. A device according to claim 1, characterized in that the receptacle (5) has a curved profile whose top portion is located in the neighbourhood of the point where it communicates with the first pre-tank (20).

3. A device according to any one of the preceding claims, characterized in that the pre-tanks (20 to 29) have a curved profile whose top portion is situated in the vicinity of the capillary insertion orifice (30 to 39) of the corresponding analysis cell (10 to 19).

4. A device according to any one of claims 1 to 3, characterized in that the communication means between the pre-tanks include a duct (50) provided with baffle plates (51) which are transverse with respect to the longitudinal axis of the device.

5. A device according to any one of claims 1 to 4, characterized in that the analysis cells (10 to 19) are substantially adjacent to one another.

6. A device according to any one of claims 1 to 5, characterized in that the pre-tanks (20 to 29) are adjacent to one another.

7. A device according to any one of claims 1 to 6, characterized in that the analysis cells (10 to 19) are substantially cylindrical.

8. A device according to any one of claims 1 to 7, characterized in that the walls which delimit the bottom and the top of the analysis cells (10 to 19) are transparent so as to allow a colorimetric analysis.

9. A device according to any one of claims 1 to 8, characterized in that it includes means (61A, 62A) which allow it to be fixed to the rotary circular plate (60).

FIG.1

FIG.3

FIG.4

FIG.2

0 084 983

FIG.5

FIG.6

FIG.7